# EUROPEAN PATENT APPLICATION

(11) **EP 3 819 159 A1**
(43) Date of publication of application: **12.05.2021**
(21) Application number: 19382983.5
(22) Date of filing: 11.11.2019
(51) Int. Cl.: B60L 53/10, B60L 53/14, H02M 3/335

(54) **MULTI-PORT AND MULTI-DIRECTIONAL POWER CONVERSION SYSTEM FOR ELECTRIC AND/OR HYBRID VEHICLES**

(71) Applicant: Fico Triad, S.A., 08028 Barcelona (ES)
(72) Inventor: Ruíz Erni, Iván, 08232 Viladecavalls (Barcelona) (ES)
(74) Representative: Hoffmann Eitle

(57) **Abstract**

The invention refers to a multi-port and multi-directional power conversion system for electric and/or hybrid vehicles, comprising: a transformer having at least three windings, at least three power modules, each power module connected to one to the windings of the transformer, a control unit adapted for controlling the operation of each one of the power module, and for dynamically selecting at least two power modules for transferring power between them, and wherein the control unit is additionally adapted for controlling the direction of power transfer between the at least two power modules for transferring power, by setting a voltage phase shift between the at least two power modules. The power conversion system of the invention can be manufactured with a reduced number of components, thereby reducing manufacturing cost and size and increasing efficiency and system performance.

## Description

### Field and object of the invention

The present invention refers to an electronic power conversion system to convert and transfer electric power between a plurality of ports like power sources and/ or loads operating at different or the same voltage. The system is preferably adapted for its integration in an electric and/or hybrid vehicle.

An object of the invention is to provide a power conversion system capable of multi-directional power conversion and energy transfer, between multiple ports of electric-powered vehicle.

The power conversion system of the invention can be manufactured with a reduced number of components, thereby reducing manufacturing cost and size and increasing efficiency and system performance.

### Background of the invention

Vehicle electric systems integrate a variety of equipment or sub-subsystems operating at the same or different dc nominal voltage. For example, electric and hybrid vehicles incorporate a traction battery that operates at high voltage (typically ranging from 250 Volts to 450Volts or from 350 Volts to 800 Volts) to energize the traction system through an inverter, a heat system, and an auxiliary battery to supply low voltage power to equipment onboard the vehicle that requires lower voltage. The most widespread nominal low voltages are 12V and 48V, which correspond to the equipment traditionally used in the automobile environment.

Therefore, several voltage levels and their required charging systems are typically integrated in electric vehicles and/ hybrid electric vehicles, namely High-voltage battery, Low-voltage battery, traction inverter bus, etc. Power is transferred between these different voltage ports by means of power modules, generally dc/dc converters and typically one ac/dc converter as the PFC.

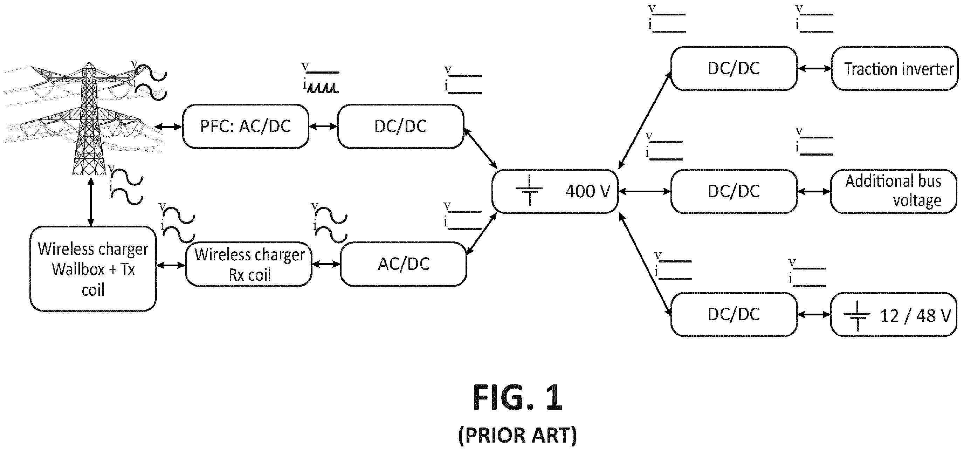

**Figure 1** illustrates a conventional electrical vehicle system including the subsystem to recharge the electric or hybrid vehicle from the grid, and other several vehicle electric sub-systems. The external charging of the traction battery can be carried out using alternative charging systems, such as directly from the grid through an ac/dc converter including a Power Factor Correction (PFC), directly from grid through a dc/dc converter, through a wireless charger, etc. In turn, electric and hybrid vehicles are capable of charging the auxiliary battery from the traction battery, or even from an external power source during external charging, thus, specific power converters are provided for such power conversion between internal subsystems.

The low voltage auxiliary battery can also be used to transfer power to the high voltage traction battery, and for that power transfer another dc/dc power converter has to be provided. Furthermore, the traction battery can also be used to supply power to the onboard electronic equipment of the vehicle, so that another dc/dc converter is incorporated to lower the voltage of the traction battery to the nominal voltage of the onboard equipment.

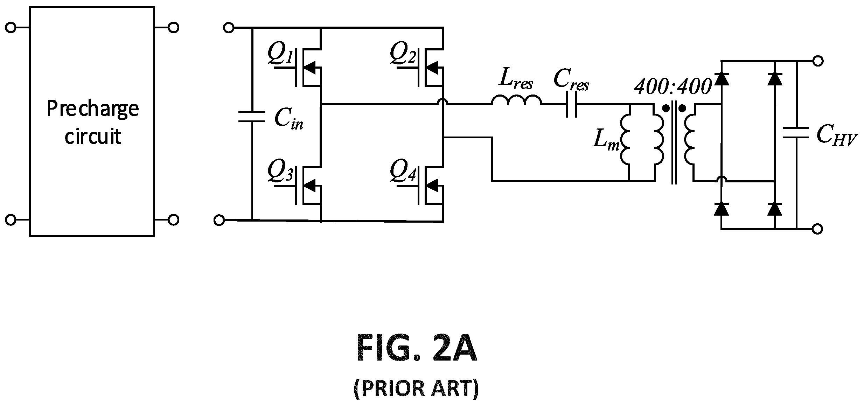

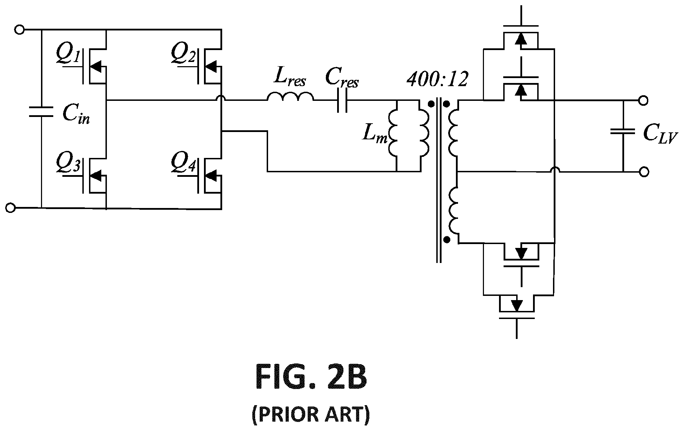

In consequence, a multiplicity of power converters of different topology are integrated in the vehicle. LLC resonant topologies are conventionally used to implement the converters due to its wide voltage gain, however these converters only allow unidirectional power flow. **Figures 2A****,****2B** show prior art LLC converters conventionally used to individually transfer power between different power sources / loads in a vehicle.

The conventional approach, is to provide specific converters with different topology configurations for each voltage conversion rate requirement, so that, a multiplicity of different power converters have to be provided to convert and transfer power between the different power sources and loads, and as consequence, two or more converters are connected to the same power source or load.

This conventional approach result in complex circuits with a lot of components (power semiconductors, transformers, microcontrollers, sensors, connectors wires, enclosures etc), so that many redundancies appear, thereby increasing manufacturing cost and complexity.

### Summary of the invention

The invention is defined in the attached independent claim, and satisfactorily solves the above-mentioned drawbacks of the prior art, providing a power conversion system for electric and/or hybrid vehicles, that comprises several ports of different or the same voltage, which is capable of transferring and converting power indistinctly between ports and in any direction with a reduced number of modules among the ports.

The power conversion system comprises a transformer having at least three windings, and at least three power modules, each one respectively connected to one to the windings of the transformer, so that the power modules are galvanically isolated from each other. Each winding of the transformer may have different number of turns to produce a different or may have same number of turs to produce the same voltage, and each power module may be a port for power input or output.

The system additionally comprises a control unit adapted for controlling the operation, that is, the power conversion process, of each one of the power modules, for example by means of a PWM control. The control unit is additionally adapted for operating the power modules, as to transfer power between two or more of the power modules. The control unit is additionally adapted for selecting the direction of power flow during the power transfer between the power modules. The control unit accomplishes that function by setting a phase shift between a pair of power modules between which power is being transferred.

With the above-defined architecture, only one transformer and only one control unit are used in common for all the power modules. In contrast to the prior art, only one power converted is connected to each power source or load, therefore the number of components and the complexity of the system, are reduced significantly.

The system includes an inductor connected in series between the pair of power modules between which power is being transferred. This can be implemented by incorporating the inductor in at least one of the power modules. In the case, that only one power module has an inductor incorporated, for transferring power between the power modules with no inductor, the control unit is adapted for transferring power between those two power modules through the power module with the inductor. Also the inductor can be integrated in the transformer as leakage inductance for high frequencies or when a little L is needed.

In other preferred embodiment, each one of the power modules has an inductor incorporated.

The control unit is further adapted for controlling or varying the duty cycle of any pair of power modules between which power is transferred, for controlling the switching frequency of that pair of power modules and the voltage phase between the corresponding modules. The control unit operates the pair of power modules at the same switching frequency.

The power modules consist of: half bridges or full bridges.

A half bridge may have two input/output terminals and a first branch including two switching devices connected in series between the two terminals, and a second branch including two capacitors connected in series between the two terminals, thus, these two branches are connected in parallel. The half bridge power converted is connected to the two terminals of a winding of the transformer respectively at the central connection line between the two semiconductor switching devices and at the central connection between the two capacitors.

Another half bridge may be composed by the two switches and one capacitor connected through a first end to the central connection line between the two switches. The transformer winding is also connected to the second end of the capacitor and one end of the first branch. Other half bridge topologies are not ruled out.

The full bridge module has two input/output terminals, and a first and second branches including each branch, two semiconductor switching devices connected in series between the two terminals, and a third branch including a capacitor connected between the two terminals, thus, the three branches are connected in parallel. The full bridge power converted is connected to the two terminals of a winding of the transformer, respectively at the central connection line between the two semiconductor switching devices.

In a preferred embodiment, one power module is adapted for its connection (through its input/output terminals) with a traction battery of an electric and/or hybrid vehicle, and another power module is adapted for its connection (through its input/output terminals) with a low-voltage battery of an electric and/or hybrid vehicle. Additionally, one power module is adapted for its connection (through its input/output terminals) with an external charging system for charging an electric and/or hybrid vehicle.

### Brief description of the drawings

Preferred embodiments of the invention are henceforth described with reference to the accompanying drawings, wherein:
Figure 1.- shows a conventional electrical vehicle system including the subsystem to recharge the electric or hybrid vehicle from the grid, and other several vehicle electric sub-systems.
Figure 2.- shows in figures A, B conventional LLC topologies according to the prior art.
Figures 3 and 4.- shows two electric diagrams of an example of a power module system according to the invention. In Figure 4, the arrows represent the different paths for transferring and/or converting power, considering that at least two power modules or even all of them, can be operative at the same time.
Figure 5.- shows in figures A, B, and C three graphs representing the voltage conversion between two power modules, and the phase shift control performed during the process.

### Preferred embodiment of the invention

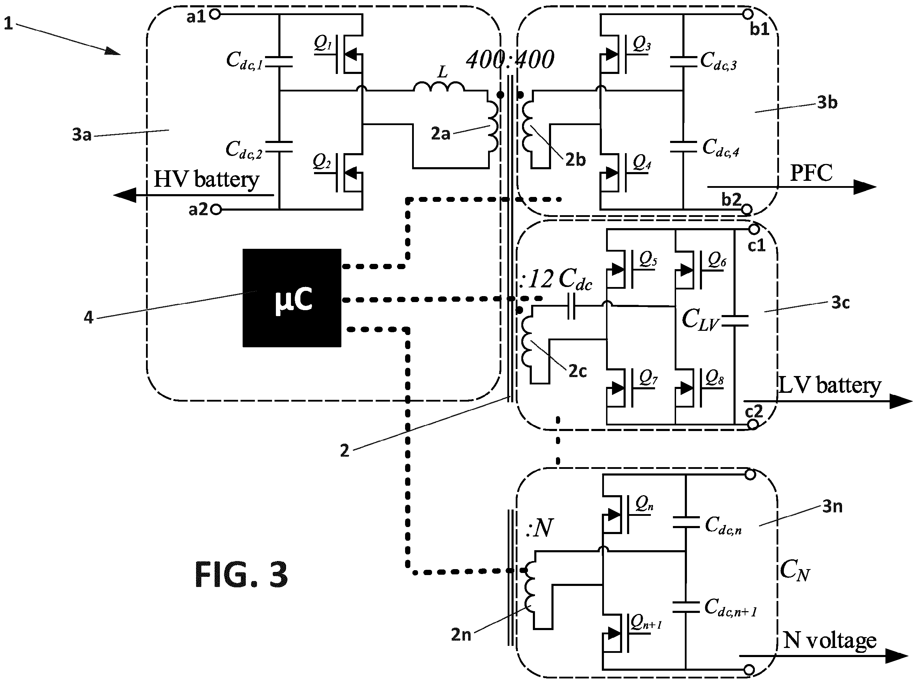

**Figure 3** is an example of a multi-port and multi-directional power conversion system (1) according to the invention, especially adapted for its integration in an electric and/or hybrid vehicle. The system (1) comprises a transformer (2) having at least three windings (2a,2b,2c), in the figure appear "n" windings (2a,2b,2c,...,2n), at least three power modules (3a,3b,3c), in the figure appear n power modules (3a,3b,3c,...,3n) connected respectively to one winding (2a,2b,2c,...,2n) of the transformer (2). More specifically, a first power module (3a) is connected to the first winding (2a) of the transformer (2), operating at 400V and it is adapted for its connection with a High-voltage traction battery, a second power module (3b) is connected with a second winding (2b) of the transformer (2), operating at 400V too, and it is adapted for its connection to an external charging system. A third power module (3c) is connected to a third winding (2c) of the transformer (2), operating at 12V, and it is adapted for its connection with a Low-voltage battery of the vehicle. Each power module is a port of the system (1). Additional n module (3n) can be connected to the n winding (2n) of the transformer (2) adapted for its connection to any electrical vehicle system.

First and second power modules (3a,3b) are half bridge having two input/output terminals (a1,a2,b1,b2), and a first branch including two semiconductor switching devices, in this case two power transistors (Mosfets) (Q1,Q2,Q3,Q4) connected in series between the two terminals (a1,a2,b1,b2), and a second branch including two capacitors (Cdc1,Cdc2,Cdc3,Cdc4) connected in series respectively between the two terminals (a1,a2,b1,b2). Both half bridge power modules (3a,3b) are respectively connected to the two terminals of a first and second windings (2a,2b) of the transformer (2), respectively at the central connection line between the two semiconductor switching devices (Q1,Q2,Q3,Q4), and the central connection line between the two capacitors (Cdc1,Cdc2,Cdc3,Cdc4).

An inductor (L) is connected in series between the first winding (2a) of the transformer (2) and the central connection line between power transistors (Q1,Q2) of the first power module (3a). The leakage inductance of the transformer (2) may be considered as the inductor (L) with high frequencies or when a little L is needed.

The third power module (3c) is a full bridge having two input/output terminals (C1,C2) and a first and second branches including each branch, two power transistors connected in series, (Q5,Q7) in the first branch, and (Q6,Q8) in the second branch, and connected each branch in parallel between the two terminals (C1,C2). The third power module (3c) has a third branch including a capacitor (Clv) connected between the two terminals (C1,C2). The full bridge power module is connected to the two terminals of a third winding (2c) of the transformer (2), respectively at the central connection lines of the two branches between the pairs of power transistors (Q5,Q7) and (Q6,Q8).

A capacitor (Cdc) is connected in series between the winding of the transformer (2c) and the central connection line between power transistors (Q6,Q8) of the same branch.

In other practical implementations of the invention, three or more power modules (either half-bridge or full-bridge type) can be connected each of them to three or more windings of the transformer (2) and operating at an N voltage, as represented by the power module (3n) of **Figure 3****.**

A control unit (4) like a programmable electronic controller is provided, for example integrated with the power module (3a), and it is adapted for controlling the conversion operation of each one of the power modules (3a,3b,3c,...,3n), by switching on and off the power transistors in a manner known for a skilled person in the art. Power transistors driving can be performed via isolated drivers like opto-drivers.

Preferably, isolated voltage and current measurements of each module are provided to the control unit (4).

Optionally, a relay is connected at the input of each power module to enable or disable a particular power module. Also, the relay may be placed between the winding and the power module to fully disconnect this module.

The control unit (4) is additionally adapted for dynamically selecting at least a pair of power modules for transferring power between that pair of power modules. All of the power modules (3a,3b,3c,3n) can operate at the same time, depending on the requirements of a specific situation of the vehicle.

Furthermore, the control unit (4) is adapted for setting the duty cycle and for setting the switching frequency of any pair of power modules during the power transfer. The selected pair of power modules are operated at the same switching frequency.

In the implementation of **Figure 3** only the first power module (3a) is provided with an inductor (L), so for transferring power for example between the second and third power modules (3b,3c), the control unit (4) is adapted for transferring power between those power modules through the first power module (3a) so power is always transferred through at least one inductor (L). In that case, power is first transferred from the second power module (3b) to the High-voltage battery through the first power module (3a), and then from the High-voltage battery power is finally transferred to the Low-voltage battery through the third power module (3c).

In other implementations, two or more of the power modules are provided with a series inductor (L) connected in the same manner described above for the first power module (3a). For this, an inductor can incorporated in one or more power modules, or the internal leakage inductor of the transformer could be used if the value of that leakage inductor is suitable for a specific operating frequency range.

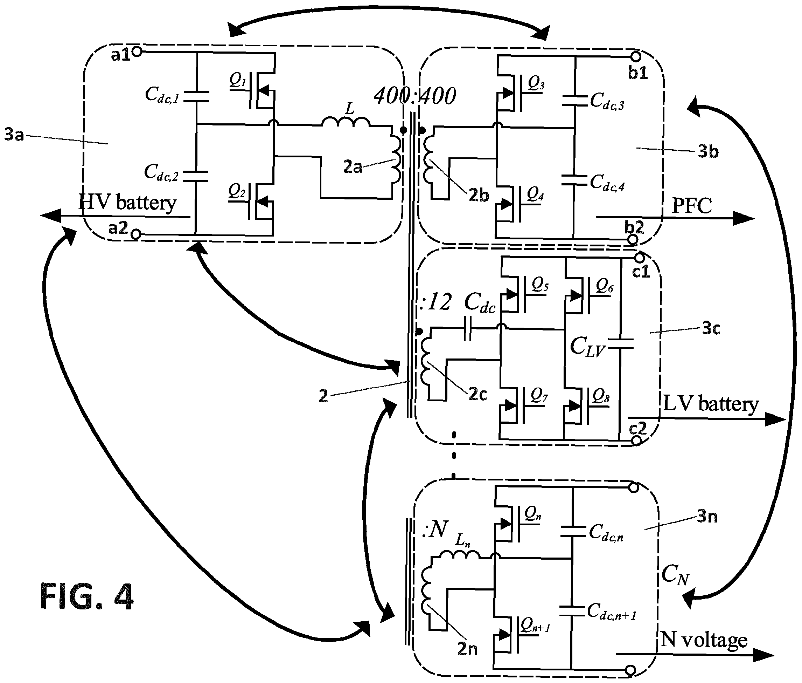

In **Figure 4****,** power module (3a) is provided with an inductor (L), and power module (3n), considering as suitable for the use its leakage inductor (Lₙ) of the transformer due to working with high frequencies or the necessity of a low inductance for the transferring of energy, uses the leakage inductor (Lₙ) of the transformer as an inductor, and all possible combinations of two power modules for transferring power through at least one inductor, are indicated by arrows in **Figure 4****.**

With the architecture described above, the control unit (4) dynamically operates the power modules as to transfer power between at least two of power modules, as indicated by the arrows of **Figure 4****,** as required in any particular moment during the operation of a vehicle.

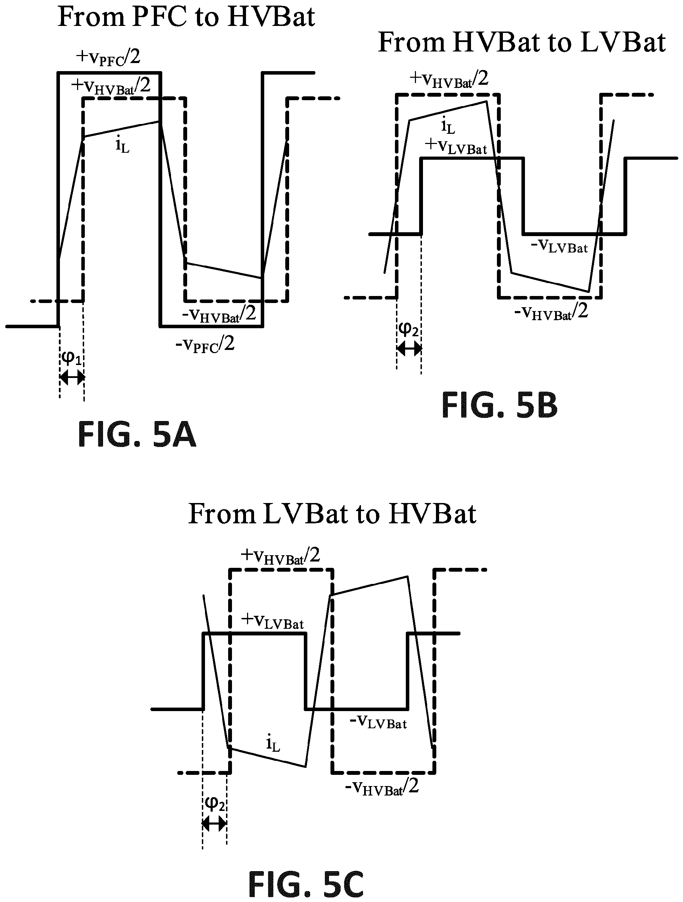

As represented in **Figures 5A, 5B,** and **5C****,** the control unit (4) is additionally adapted for controlling the direction of power transfer between two power modules for transferring power, by setting a voltage phase shift between both power modules. The more phase shift, the more the power is transferred, until the maximum available voltage phase shift is achieved which is half of the duty cycle.

By setting the voltage phase shift (φ), the direction of power transfer is dynamically selected so it can be reversed if required.

**Figure 5A** shows power transfer from the second power module (3b) connected to a Power Factor Correction (PFC) device, to the first power module (3a) connected to a High-voltage battery, such voltage signal V_{HVBat} at terminals (a1,a2) is delayed a phase shift (φ1) with respect to voltage signal V_{PFC} at terminals (b1,b2). Current through the inductor (iL) is also represented in the figure.

Similarly, **Figure 5B** shows power transfer from the first power module (3a) connected to a High-voltage battery, to the third power module (3c) connected to a Low-voltage battery, such voltage signal V_{LVBat} at terminals (c1,c2) is delayed a phase shift (φ2) with respect to voltage signal V_{HVBat} at terminals (a1,a2). Current through the inductor (iL) is also represented in the figure.

Finally, **Figure 5C** shows power transfer from the third power module (3c) connected to a Low-voltage battery, to the first power module (3a) connected to a High-voltage battery, to such voltage signal V_{HVBat} at terminals (a1,a2), is delayed a phase shift (φ3) with respect to voltage V_{LVBat} at terminals (c1,c2).

Other preferred embodiments of the present invention are described in the appended dependent claims and the multiple combinations of those claims.

## Claims

1. Multi-port and multi-directional power conversion system for electric and/or hybrid vehicles, comprising:
a transformer having at least three windings,
at least three power modules, each power module connected to one to the windings of the transformer,
a control unit adapted for controlling the operation of each one of the power modules, and for dynamically selecting at least two power modules for transferring power between them, and
wherein the control unit is additionally adapted for controlling the direction of power transfer between the at least two power modules for transferring power, by setting a voltage phase shift between the at least two power modules.

2. Power conversion system according to claim 1, further comprising an inductor either connected in series between the selected at least two power modules for power transfer or as a leakage inductance of the transformer.

3. Power conversion system according to claim 1 or 2, wherein the control unit is further adapted for controlling duty cycle of any of the selected at least two power modules for power transfer.

4. Power conversion system according to any of the preceding claims, wherein the control unit is further adapted for controlling the switching frequency of the selected at least two power modules for power transfer, and for operating the selected at least two power modules at the same switching frequency.

5. Power conversion system according to any of the preceding claims, wherein the power modules are selected from the following list: (i) half bridge or (ii) full bridge.

6. Power conversion system according to any of the preceding claims, wherein one of the power modules is adapted for its connection with a traction battery of an electric and/or hybrid vehicle, and another power module is adapted for its connection with a low-voltage battery of an electric and/or hybrid vehicle, and wherein one power module is adapted for its connection with an external charging system for charging an electric and/or hybrid vehicle.

7. Power conversion system according to claim 2, wherein the transformer has only three windings, and wherein the inductor is connected in series between one terminal of a winding and the power module connected with that winding.

8. Power conversion system according to claim 7, wherein the control unit is additionally adapted for controlling the operation of the power modules so as to transfer power between a first and second power modules through a third power module, and to transfer power between the first power module to the third power module and from the third power module to the second power module.

9. Power conversion system according to any of the preceding claims, wherein at least one of the power modules is a half bridge having two input/output terminals, and a first branch including two switching devices connected in series between the two terminals, and a second branch including two capacitors connected in series between the two terminals, and wherein the half bridge is connected to the two terminals of a winding of the transformer respectively at the central connection line between the two switching devices and the two capacitors.

10. Power conversion system according to any of the preceding claims, wherein at least one of the power modules is a half bridge having a first branch including two switching devices and one capacitor connected through a first end to the central connection line between the two switching devices, and wherein a transformer winding is also connected to the second end of the capacitor and one end of the first branch.

11. Power conversion system according to any of the preceding claims, wherein at least one of the power modules is a full bridge power modules having two input/output terminals, and a first and second branches including each branch, two semiconductor switching devices connected in series between the two terminals, and a third branch including a capacitor connected between the two terminals, and wherein the full bridge power converted is connected to the two terminals of a winding of the transformer respectively at the central connection line between the two semiconductor switching devices.
